**Europäisches Patentamt**

**European Patent Office**

**Office européen des brevets**

(19)

(11) Veröffentlichungsnummer: **0 433 614 A1**

# (12) EUROPÄISCHE PATENTANMELDUNG

(21) Anmeldenummer: **90120643.3**

(22) Anmeldetag: **27.10.90**

(51) Int. Cl.⁵: **B64C 9/10**

(30) Priorität: **21.12.89 DE 3942252**

(43) Veröffentlichungstag der Anmeldung:
**26.06.91 Patentblatt 91/26**

(84) Benannte Vertragsstaaten:
**DE FR GB IT**

(71) Anmelder: **DORNIER LUFTFAHRT GMBH**
**Postfach 3**
**W-8031 Wessling/Oberpfaffenhofen(DE)**

(72) Erfinder: **Artmann, Josef, Dr.Phil.**
**Auf dem Ruhbühl 16**
**W-7997 Immenstaad(DE)**

(72) Erfinder: **Baumann, Jürgen, Dipl.-Ing.**
**Im Briel 6**
**W-7762 Bodmann/Ludwigshafen(DE)**
Erfinder: **Simm, Walter, Dipl.-Ing.**
**Rauscher Fussweg 6**
**W-8036 Herrsching(DE)**
Erfinder: **Halfmann, Günther, Dipl.-Ing.**
**Josef-Maier-Strasse 25**
**W-7777 Salem(DE)**

(74) Vertreter: **Landsmann, Ralf, Dipl.-Ing.**
**DORNIER GMBH - Patentabteilung - Kleeweg**
**3**
**W-7990 Friedrichshafen 1(DE)**

(54) **Flugzeugsteuereinrichtung, insbesondere Seitensteuerung.**

(57) Flugzeugsteuereinrichtung, insbesondere aus Flosse (11) und Ruder (12) gebildete Seitensteuerung, bei der Steuermittel (28) zur Verstellung des Ruders (12) und eines am Ruder (12) verschwenkbaren Hilfsruders (25), sowie eine das Ruder (12) und das Hilfsruder (25) in eine vorbestimmter Stellung zueinander koppelnden Verriegelungseinrichtung (50) vorgesehen sind, und wobei das Seitenruder (12) und das Hilfsruder (25) in Abhängigkeit voneinander verstellbar sind, und daß das Seitenruder (12) das Hilfsruder (25) relativ gegeneinander verstellbar und mittels einer Verriegelung (50) starr miteinander koppelbar sind.

Fig. 2

EP 0 433 614 A1

## FLUGZEUGSTEUEREINRICHTUNG, INSBESONDERE SEITENSTEUERUNG

Die Erfindung betrifft eine Flugzeugsteuereinrichtung, insbesondere eine aus einer Stabilisietungsflosse und daran schwenkbarem Ruder gebildete Seitensteuerung nach dem Oberbegriff des Anspruches 1.

Bekannt sind Steuereinrichtungen, die an einer Stabilisierungsflosse eine bewegliche Ruderfläche und eine an dieser verstellbar gelagerte Hilfssteuerfläche aufweisen. Beide Steuerflächen sind in Abhängigkeit von der Betätigung eines Getänges verstellbar.

Für die Verwendung des Hilfsruders zur Unterstützung des Hauptruders oder zur Änderung der Profilwölbung ist hierbei eine umschaltbare Verstelleinrichtung vorgesehen (DRP 694 306).

Ferner ist eine Einrichtung zur Verriegelung einer Ruderfläche für Flugzeuge bekannt, bei der zur Verstellung des Ruders dienende Elemente zur Verriegelung herangezogen werden. Die Verriegelung zwischen der Ruderfläche und der Stabilisierungsflosse wird bewirkt in Abhängigkeit von der Verstellung einer Trimmfläche in einem vorbestimmten Trimmausschlagbereich (DRP 672 157).

Gegenüber dem Bekannten ist es Aufgabe der vorliegenden Erfindung eine Steuereinrichtung gemäß der angegebenen Gattung so auszubilden, daß im mittleren und hohen Geschwindigkeitsbereich der Freiheitsgrad "Hilfsruderschwenkung" gefesselt wird, um die Gefahr des Auftretens von Hilfsruderflattern und gleichzeit die Gefahr einer strukturellen Überbeanspruchung infolge von zu großen Ruderanschlägen zu vermeiden.

Die gestellte Aufgabe ist erfindungsgemäß mit einer nach den kennzeichnenden Merkmalen des Anspruches 1 ausgebildeten Steuereinrichtung gelöst. Weitere vorteilhafte Ausgestaltungen der Erfindung ergeben sich aus den Merkmalen der dem Anspruch 1 nachgeordneten Ansprüche.

Eine gemäß der Erfindung ausgebildete Steuereinrichtung ermöglicht eine Verriegelung zwischen dem Seitenruder und dem Hilfsruder im mittleren und hohen Geschwindigkeitsbereich des Flugzeuges, so daß der Freiheitsgrad "Hilfsruderschwenkung" unterdrückt wird und die Gefahr einer strukturellen Überbeanspruchung entfällt.

In der Zeichnung ist eine Ausführungsform einer erfindungsgemäßen Steuereinrichtung dargestellt, die anhand der nachfolgenden Beispielsbeschreibung näher erläutert ist.

In der Zeichnung zeigt.

Fig. 1    die Steuereinrichtung in einem Ausschnitt aus dem Heckteil eines Flugzeuges in Seitenansicht, schematisiert dargestellt,

Fig. 2    einen teilweisen Querschnitt durch das Seitenleitwerk gemäß Fig. 1 und

Fig. 3    in einem Querschnitt Einzelheiten des Seitenleitwerks nach Fig. 1 und 2 in vergrößertem Maßstab.

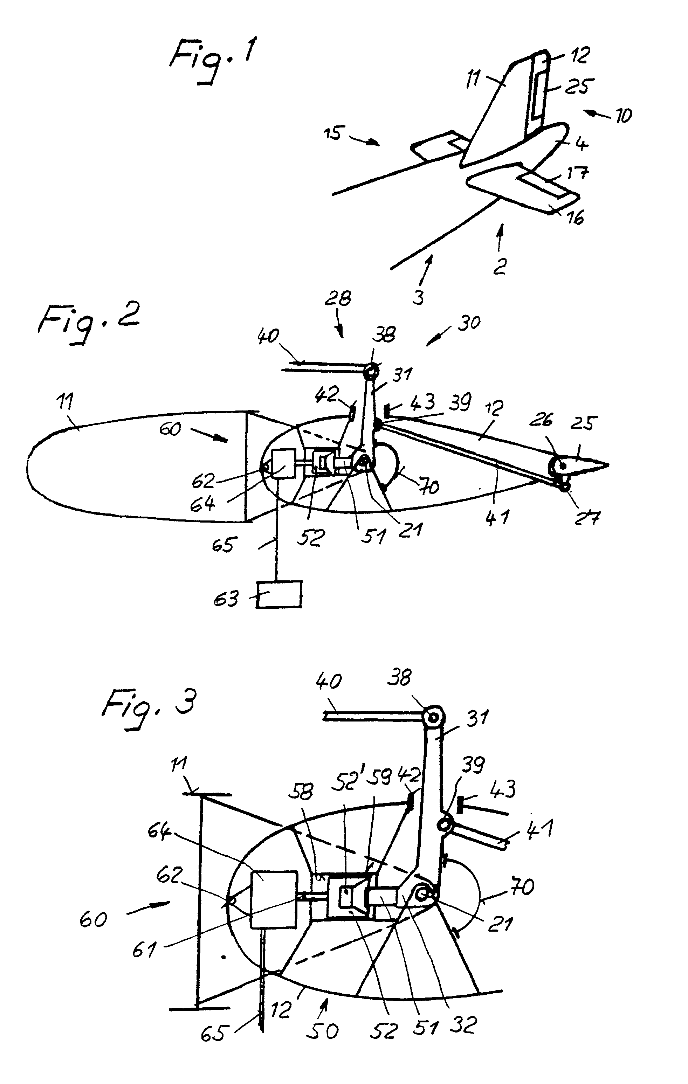

In der Zeichnung Fig. 1,2 und 3 ist mit 2 das am Heck 4 des Flugzeugrumpfes 3 in üblicher Bauweise angeordnete Leitwerk bezeichnet. Die Bauelemente des Leitwerkes 2 sind hierbei die Seitensteuerung 10 mit der feststehenden Seitenleitwerksflosse 11 und dem an dieser verstellbar gelagerten Seitenruder 12. Mit 15 ist ferner die Höhensteuerung mit der feststehenden Höhenleitwerksflosse 16 und dem an dieser schwenkbar gelagerten Höhenruder17 bezeichnet. Das Seitenruder 12 ist gegenüber dem Flugzeugrumpf beziehungsweise der Seitenleitwerksflosse 11 um die Achse 21 verstellbar.

Am Seitenruder 12 lagert sich mittels einer Achse 26 ein Hilfsruder 25, wobei die Schwenkachsen 21 und 26 vertikal oder annähernd vertikal gerichtet angeordnet sind.

Mitteils eines Steuergestänges 28 sind sowohl das Seitenruder 12 als auch das Hilfsruder 25 mit dem vom Piloten zu betätigenden Pedal (nicht dargestellt) verbunden.

Dabei schließt das Pedal über eine Steuerstange 40 und ein Gelenk 38 an einen Stellhebel 30 an. Dieser Stellhebel 30 ist als Winkelhebel ausgebildet, wobei dessen Arme mit 31 beziehungsweise mit 32 bezeichnet sind. Der Winkelhebel 30 lagert sich auf der Achse 21, die auch die Schwenkachse des Seitenruders 12 bildet.

Mittels der Steuerstange 40 und des Gelenkes 38 ist die Fußbetätigung an den Hebelarm 31 des Stellhebels 30 angeschlossen, wobei der Stellhebel 30 auf der Ruderschwenkachse oder einer dazu koaxialen Achse frei schwenkbar gelagert ist.

Gleichzeitig schließt an den Hebelarm 31 des Stellhebels 27 mittels eines Gelenks 39 eine Koppelstange 41 an.

Die Koppelstange 41 ist mit ihrem anderen Ende über ein Gelenk 37 mit dem Hilfsruder 25 in Verbindung. Mittels des Gestänges 28, des Stellhebels 30 und der Koppelstange 41 ist das Hilfsruder 25 in Abhängigkeit von der Pedalbewegung um seine Achse 26 am Seitenruder 12 schwenkbar. Der Stellhebel 30 wird dabei durch ein Federelement 70 beeinflusst, welches sich am Seitenruder 12 abstützt. Das Federelement 70 kann zur Erhaltung des Steuergefühls unter einer gewissen Vorspannung stehen.

Die Seitensteuerung 10 weist ferner eine Verriegelung 50 auf, die sich aus einem Verriegelungselement 51 am Stellhebel 30 (Hebelarm 32) und einem Gegenelement 52 an der Ruderfläche 12 zusammensetzt. Das Element 51 weist dabei die Form eines Bolzens für den wahlweisen Eingriff in eine Bohrung 52' des Elements 52 auf. Dabei ist das Element 52 mit seiner Führung 59 in Richtung der Profiltiefe des Ruders 12 in einer Führungsbohrung 58 des Seitenruders 12 verschiebbar geführt. Die Bohrung des Elements 52 ist zur Führung in die Einraststellung bei in Ausschlagstellung befindlichem Hilfsruder 25 und zur Erleichterung des Einrastens der Elemente 51 beziehungsweise 52 trichterförmig erweitert.

Das Kupplungselement 52 der Verriegelung 50 ist über eine Stellerstange 61 angeschlossen an eine Stelleinrichtung, die staudruckabhängig arbeitet. Dazu weist die Einrichtung einen Steller 60 auf, der sich mittels einer Anlenkung 62 am Seitenruder 12 abstützt.

Der Steller 60 setzt sich aus einem Stellmotor und einem Staudruckschalter 64 zur Betätigung des Verriegelungselements 52 zusammen. Der Staudruckschalter 64 ist über eine Steuerleitung 65 an eine Staudruckmeßsonde 63 angeschlossen. Zwischen dem Seitenruder 12 und dem Verstellgestänge 28 beziehungsweise dem Stellhebel 30 ist ein in beiden Verstellrichtungen wirksames Federelement 70 eingesetzt, gegen dessen Wirkung das Seitenruder 12 gegenüber dem Gestänge 28 und damit gegenüber dem Hilfsruder 25 eine durch Anschläge 42 beziehungsweise 43 begrenzte Relativbewegung auszuführen vermag.

Die Wirkungsweise der Ausführungsform der Steuereinrichtung ist wie nachfolgend erläutert.

Die Seitensteuerung 10 wird bewirkt mittels der Betätigung des Fußpedals durch den Piloten in üblicher Weise. Die Verstellung des Seitenruders 12 wird übertragen durch das Steuergestänge 28 und den Stellhebel 30.

Infolge des zwischen Steuergestänge 28 Hebel 30 und dem Seitenruder 12 eingesetzten Federelementes 70 wird das Seitenruder 12 bei geringer Strömungsbeaufschlagung vom Gestänge 28 unmittelbar mitgenommen oder durch die bei starker Beaufschlagung hervorgerufenen Kräfte relativ gegenüber der Bewegung des Gestänges 28 verstellt.

Die Relativbewegung zwischen Verstellgestänge 28 und dem Ruder 12 bewirkt mittels der Koppelstange 41 eine Relativverstellung zwischen Ruder 12 und Hilfsruder 25. Dabei ist die Verstellbewegung des Hilfsruders 25 der Verstellbewegung des Ruders 12 entgegengerichtet. Dadurch wird auf das Seitenruder 12 eine die Steuerung unterstützende Kraft ausgeübt, so daß die vom Piloten aufzubringenden Stellkräfte vermindert und die Komponenten der Steuereinrichtung, sowie die Zellenstruktur, wesentlich entlastet werden.

Im mittleren und hohen Fluggeschwindigkeitsbereich erfolgt mittels der Verrielungzwischen dem

Seitenruder 12 und dem Hilfsruder 25 in ihrer Neutralstellung zueinander, so daß die Reduktion der Ruderbetätigungskraft entfällt und damit Gefahren der strukturellen Überbeanspruchung und die Gefahr des Auftretens von Hilfsruderflattern entfallen.

Die Verriegelung 50 wird automatisch bei Absinken der Fluggeschwindigkeit beziehungsweise der Beaufschlagung des Ruders 12 unter eine vorgegebene Grenzgeschwindigkeit (Grenzstaudruck) wieder gelöst.

## Ansprüche

1. Flugzeugsteuereinrichtung, insbesondere aus Flosse und Ruder gebildete Seitensteuerung, mit Steuermitteln zur Verstellung des Ruders und einem am Ruder schwenkbar angeordneten Hilfsruder, sowie einer das Ruder und das Hilfsruder in vorbestimmter Lage zueinander koppelnde Verriegelung, **dadurch gekennzeichnet,** daß
   a) das Seitenruder (12) und das Hilfsruder (25) mittels eines Steuergestänges (28) in Abhängigkeit voneinander verstellbar sind, daß
   b) das Seitenruder (12) und das Hilfsruder (25) um einen begrenzten Verstellweg relativ zueinander bewegbar angeordnet sind und daß
   c) das Seitenruder (12) und das Hilfsruder (25) mittels einer Verriegelung (50) statt miteinander kuppelbar sind.

2. Steuereinrichtung nach Anspruch 1, **dadurch gekennzeichnet,** daß zwischen Steuergestänge (28) und Seitenruder (12) eine Federungseinrichtung (70) angeordnet ist, gegen deren Wirkung die Relativbewegung zwischen Seitenruder (12) und Hilfsruder (25) erfolgt.

3. Steuereinrichtung nach Anspruch 1 oder 2, **dadurch gekennzeichnet,** daß zur Begrenzung der nachgiebigen Koppelung zwischen Seitenruder (12) und Steuergestänge (28) Anschläge (42,43) vorgesehen sind.

4. Steuereinrichtung nach mindestens einem der vorangehenden Ansprüche, **dadurch gekennzeichnet,** daß die Verriegelung (50) zwischen Seitenruder (12) und Verstellgestänge (28) in Abhängigkeit von den gemessenen Werten einer Staudruckmeßeinrichtung (63, 64, 65) betätigbar ist.

5. Steuereinrichtung nach mindestens einem der vorangehenden Ansprüche, **dadurch gekennzeichnet,** daß die Koppelung zwischen Steuergestänge (28) und Seitenruder (12) in Neutralausschlagstellung (Null-Ausschlagstellung) von Seitenruder (12) und Hilfsruder (25) erfolgt.

6. Ausführungsform einer Steuereinrichtung nach mindestens einem der vorangehenden Ansprüche, **dadurch gekennzeichnet,** daß das Hilfsruder (25) ) und die Gefahr des Auftretens von Hilfsruderflattern unmittelbar mit dem Steuergestänge (28) über eine Anlenkung (39) verbunden ist.

7. Steuereinrichtung nach mindestens einem der vorangehenden Ansprüche, **dadurch gekennzeichnet,** daß die Betätigung der Verriegelung (50) mittels eines Steuerorgans willkürlich erfolgt.

8. Steuereinrichtung nach mindestens einem der vorangehenden Ansprüche, **dadurch gekennzeichnet,** daß die Verriegelung der Hilfsruder (25) mit dem Seitenruder (12) in einer Trimmausschlagstellung bwirkt wird.

Fig. 1

Fig. 2

Fig. 3

**Europäisches Patentamt**

# EUROPÄISCHER RECHERCHENBERICHT

Nummer der Anmeldung

**EP 90 12 0643**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 369 781 (CICHY,DENNISTON,MACCAY) <br> * Spalte 3, Zeile 7 - Spalte 3, Zeile 63; Figuren 2-4 * <br> — — — | 1-3 | B 64 C 9/10 |
| D,A | DE-C-6 943 06 (HEINKEL) <br> * Seite 2, Zeile 36 - Seite 2, Zeile 65 * * Seite 2, Zeile 108 - Seite 3, Zeile 16; Figuren 1, 2 * <br> — — — | 1,4 | |
| A | US-A-2 325 548 (ROOS,DÖRR,KOCH) <br> * Seite 1, linke Spalte, Zeile 6 - Seite 1, linke Spalte, Zeile 23 * * Seite 1, rechte Spalte, Zeile 24 - Seite 2, linke Spalte, Zeile 15; Figur 1 * <br> — — — — — | 1 | |
| | | | **RECHERCHIERTE SACHGEBIETE (Int. Cl.5)** <br><br> B 64 C |

Der vorliegende Recherchenbericht wurde für alle Patentansprüche erstellt

| Recherchenort | Abschlußdatum der Recherche | Prüfer |
|---|---|---|
| Den Haag | 25 März 91 | ZERI A. |